Europäisches Patentamt

European Patent Office

Office européen des brevets

(11) Numéro de publication : **0 526 372 A1**

## (12) DEMANDE DE BREVET EUROPEEN

(21) Numéro de dépôt : 92460023.2

(22) Date de dépôt : 23.07.92

(51) Int. Cl.⁵ : **B01D 65/02**

(30) Priorité : **26.07.91 FR 9109703**

(43) Date de publication de la demande :
**03.02.93 Bulletin 93/05**

(84) Etats contractants désignés :
**CH DE DK ES GB IT LI**

(71) Demandeur : **SOCIETE DE TRAITEMENTS HYDREX S.N.C.**
**45 rue Senouque**
**F-78530 Buc (FR)**

(72) Inventeur : **Corsin, Pierre**
**9 rue de l'Etang**
**F-78150 Rocquencourt (FR)**
Inventeur : **Faivre, Michel**
**2 place Anne Franck**
**F-78260 Acheres (FR)**
Inventeur : **Michel, Gérard**
**11 avenue du Lycée Lakanal**
**F-92340 Bourg La Reine (FR)**

(74) Mandataire : **Corlau, Vincent**
**c/o Cabinet Patrice Vidon Immeuble Germanium 80 avenue des Buttes de Coesmes**
**F-35700 Rennes (FR)**

(54) **Procédé et dispositif de décolmatage de membranes de filtration.**

(57) L'invention concerne le décolmatage de membranes de filtration telles que celles utilisées dans le domaine de la microfiltration et de l'ultrafiltration.

L'objectif est d'obtenir un décolmatage de la membrane, agissant tant en surface qu'en profondeur, sur une durée brève.

Selon l'invention, le procédé comprend au moins une étape consistant à provoquer le passage d'un fluide à travers la membrane, de la chambre de récupération du filtrat (34) vers la chambre d'alimentation (33) du mélange à filtrer selon un flux inverse au sens de filtration, le passage de fluide étant provoqué en plaçant ladite chambre d'alimentation (33) en dépression brusque par rapport à la chambre de récupération (34), ledit fluide étant constitué par un mélange d'air et d'eau à l'équilibre apte à être détendu notamment à l'intérieur de la membrane pour donner de l'eau blanche lors de la détente.

Fig. unique

EP 0 526 372 A1

L'invention concerne le décolmatage de membranes de filtration telles que celles utilisées dans le domaine de la microfiltration et de l'ultrafiltration.

Les techniques de micro- et ultrafiltration sont des techniques de séparation sous pression au moyen d'une membrane dont la perméabilité est telle que seulement un ou plusieurs constituants puisse la traverser. Cette technique permet ainsi la séparation de suspensions, d'émulsions ou de dispersions colloïdales dans les liquides tels que l'eau.

Un domaine d'application intéressant est le traitement des eaux.

Les membranes utilisées dans le cadre des techniques de micro- et ultrafiltration sont pourvues de pores dont le diamètre détermine le passage à travers la membrane, ou la rétention, des particules contenues dans le liquide à traiter. La partie du mélange qui traverse la membrane est appelée filtrat. La partie du mélange qui ne traverse pas la membrane est appelée rétentat. Cette technique connaît de nombreuses applications notamment dans le domaine précité du traitement des eaux.

Selon la nature des mélanges à filtrer, les membranes de filtration utilisées présentent des caractéristiques différentes. Il existe ainsi des membranes rigides, telles que les membranes minérales qui présentent une bonne résistance à la pression et une résistance chimique excellente. On utilise aussi des membranes organiques pouvant se présenter sous la forme de réseaux souples de fibres creuses. Ce type de membranes permet d'assurer une grande surface filtrante . Les réseaux de fibres creuses sont le plus fréquemment organisés en faisceaux séparant la chambre d'alimentation du mélange à traiter de la chambre de récupération du filtrat. Ces faisceaux peuvent ainsi être organisés en unités cylindriques, les fibres creuses étant disposées parallèlement à la génératrice des cylindres, la partie creuse s'étendant longitudinalement à l'intérieur de celles-ci. On parle alors de membranes tubulaires.

Selon le cas, ces membranes sont utilisées :

- soit en filtration dans le sens extérieur vers intérieur, utilisation dans laquelle le mélange liquide sous pression à traiter est amené dans une chambre d'alimentation située à l'extérieur de la membrane de forme généralement cylindrique, le filtrat étant récupéré dans la lumière de la fibre,
- soit en filtration dans le sens intérieur vers extérieur, où le mélange liquide à traiter est introduit dans la lumière de la fibre et le filtrat étant récupéré à l'extérieur de celle-ci.

Les matériaux les plus couramment utilisés pour les fibres creuses sont les polymères thermoplastiques tels que le polypropylène, le polyéthylène, les polysulfones...

Un des principaux problèmes relatifs à la micro- et ultrafiltration est le colmatage des membranes. On distingue deux types de colmatages :

- le colmatage dû à l'accumulation sur la surface filtrante de la membrane de particules ou composés organiques ayant des dimensions supérieures au diamètre des pores ;
- le colmatage provoqué par la pénétration à l'intérieur des pores de particules ou composés organiques ayant des dimensions légèrement inférieures à celles des pores mais suffisamment grosses pour boucher ceux-ci.

Ce colmatage des membranes entraine une diminution du débit de filtrat, donc une baisse de productivité qui peut intervenir très rapidement dans le cas où le mélange à traiter est très chargé.

De nombreux procédés ont été proposés pour permettre le décolmatage des membranes lorsque le débit de filtrat devient trop faible. On connaît ainsi des procédés de décolmatage de membranes selon lesquels on interrompt périodiquement la circulation du mélange à traiter lorsque le débit du filtrat est tombé au-dessous d'un certain seuil, et on fait circuler à travers la membrane pendant cette interruption un fluide de nettoyage, notamment un courant gazeux de nettoyage. Par exemple, le document de brevet français FR 2 297 660 dévoile un procédé de décolmatage de membranes consistant à alterner le passage du mélange à filtrer avec le passage d'un flux gazeux en sens direct ou en sens inverse, pour entraîner et évacuer les particules colmatantes avec le liquide contenu dans la membrane.

De même, le brevet français FR 2 525 488 divulgue un procédé pour décolinater les filtres, consistant à faire alterner les opérations de filtration avec une opération d'injection à contre-courant d'un gaz tel que de l'air ou de l'azote.

Ces procédés ne donnent pas de bons résultats particulièrement en ce qui concerne l'évacuation des particules bloquées à l'intérieur des pores. En outre, du fait de leur faible efficacité, ces procédés présentent l'inconvénient de nécessiter une interruption assez importante de l'opération de filtration, pendant laquelle l'alternance d'injection de gaz et de fluide est répétée plusieurs fois pour obtenir le décolmatage.

Dans les deux cas, l'élimination des particules est imparfaite, et de plus exige un débit instantané très important de liquide de nettoyage dans la chambre d'alimentation pour l'évacuation des particules "décollées" par le flux gazeux.

Le but de l'invention est de fournir un procédé de décolmatage des membranes de filtration ne présentant pas les inconvénients des procédés de l'état de la technique et permettant notamment d'obtenir un décolmatage de la membrane, agissant tant en surface qu'en profondeur.

Un des objectifs de l'invention est également de proposer un procédé de décolmatage des membranes de micro- et ultrafiltration pouvant être mis en oeuvre pour décolmater tant les membranes rigides que les membranes souples.

Un autre objectif de l'invention est de fournir un tel procédé applicable préférentiellement aux membranes souples utilisées dans le sens de filtration extérieur vers intérieur.

Un autre objectif de la présente invention est de proposer un procédé de décolmatage économiquement intéressant notamment en ce qu'il peut être effectué sur une durée brève au cours de cycles de décolmatage.

Ces objectifs, ainsi que d'autres qui apparaîtront par la suite sont atteints, selon l'invention, à l'aide d'un procédé de décolmatage des membranes de filtration du type comprenant au moins une étape consistant à provoquer le passage d'un fluide à travers la membrane, de la chambre de récupération du filtrat vers la chambre d'alimentation du mélange à filtrer, selon un flux inverse au sens de filtration en provoquant l'application brutale d'une dépression à l'intérieur de la chambre d'alimentation. Ceci permet à la fois de "décoller" les matières colmatables, et de les évacuer simultanément à l'extérieur et en amont de la membrane, avec le même flux de fluide provenant d'une réserve située en aval de celle-ci (le côté aval étant défini en références au sens de filtration).

L'invention est caractérisée en ce que ledit passage de fluide est provoqué en plaçant ladite chambre d'alimentation en dépression brusque par rapport à la chambre de récupération et en ce que ledit fluide est constitué par un mélange d'air et d'eau à l'équilibre à une pression prédéterminée apte à être détendu notamment à l'intérieur de la membrane pour donner de l'eau blanche lors de la détente. On appellera ce mélange eau + air naissant : "eau pressurisée" dans la suite du texte, ou encore : "eau blanche" par référence à la couleur du mélange au moment de la détente de l'air.

Préférentiellement, ladite pression prédéterminée est avantageusement comprise entre environ 4 bar et environ 6 bar.

La mise en oeuvre préférentielle, dans le cadre du procédé selon l'invention, d'eau pressurisée sous environ 4 à environ 6 bar, permet d'obtenir un décolmatage particulièrement efficace. Lors de la détente de l'eau pressurisée, notamment à l'intérieur de la membrane, le mélange eau et air se détendant possède en effet un pouvoir nettoyant très élevé au coeur même des pores colmatés.

Selon un mode de mise en oeuvre particulier du procédé selon l'invention la membrane de filtration à décolmater est du type souple et ladite dépression brusque est suffisante pour provoquer une déformation élastique de la membrane. entraînant le cassage du "gateau" et la dilatation des pores, favorisant ainsi l'évacuation des matières retenues.

Le sens du flux inverse de nettoyage est alors avantageusement de l'intérieur vers l'extérieur de la membrane souple (filtration de l'extérieur vers l'intérieur) de façon que les déformations de la membrane puissent s'effectuer sans entrave, sous forme d'une dilatation, lors de l'opération de décolmatage.

Le procédé selon l'invention est également applicable aux membranes rigides, telles que les membranes minérales.

Selon une variante, le procédé consiste à ajouter audit fluide un ou plusieurs composants spécifiques choisis dans le groupe constitué par exemple par le chlore et l'ozone, si ces composants ne présentent aucun effet oxydant ou corrosif vis-à-vis du matériau de la membrane.

L'invention concerne également un dispositif pour la mise en oeuvre du procédé selon l'invention.

Ce dispositif comprend un module de filtration constitué d'une enceinte à l'intérieur de laquelle est disposée au moins une membrane séparant une chambre d'alimentation du mélange à filtrer d'une chambre de récupération du filtrat, la filtration s'effectuant par passage du mélange à filtrer à travers la membrane, depuis la chambre d'alimentation vers la chambre de récupération du filtrat.

Le dispositif est caractérisé en ce que ladite chambre d'alimentation est reliée d'une part à une source de vide constituée par un réservoir mis au moins sous vide partiel, ladite source de vide pouvant être mise en communication avec ladite chambre d'alimentation grâce à une vanne de façon à provoquer la mise en dépression brusque de ladite chambre d'alimentation et d'autre part à un ballon de pressurisation à asservissement de pression air et eau du type d'un ballon hydrophore.

La présence du ballon de pressurisation assure la fourniture d'un courant d'eau pour l'évacuation des matières contenues à l'intérieur et sur la face "amont" de la membrane sans risquer une cavitation à l'intérieur de la membrane, pouvant provoquer un colmatage des pores par des microbulles de gaz.

Selon une variante de l'invention, ledit ballon de pressurisation est monté en dérivation sur la canalisation aval communiquant avec ladite chambre de récupération du filtrat.

Lors de l'opération de décolmatage, le fluide passe du ballon de pressurisation vers le réservoir mis au moins sous vide partiel. A cet effet, le volume utile dudit réservoir mis au moins sous vide partiel est préférentiellemnt inférieur au volume du ballon de pressurisation afin de constituer une garde hydraulique.

Préférentiellement, le volume dudit réservoir mis sous vide partiel correspond à environ 5 fois le volume de la chambre d'alimentation plus environ un demi-litre par mètre carré de membrane.

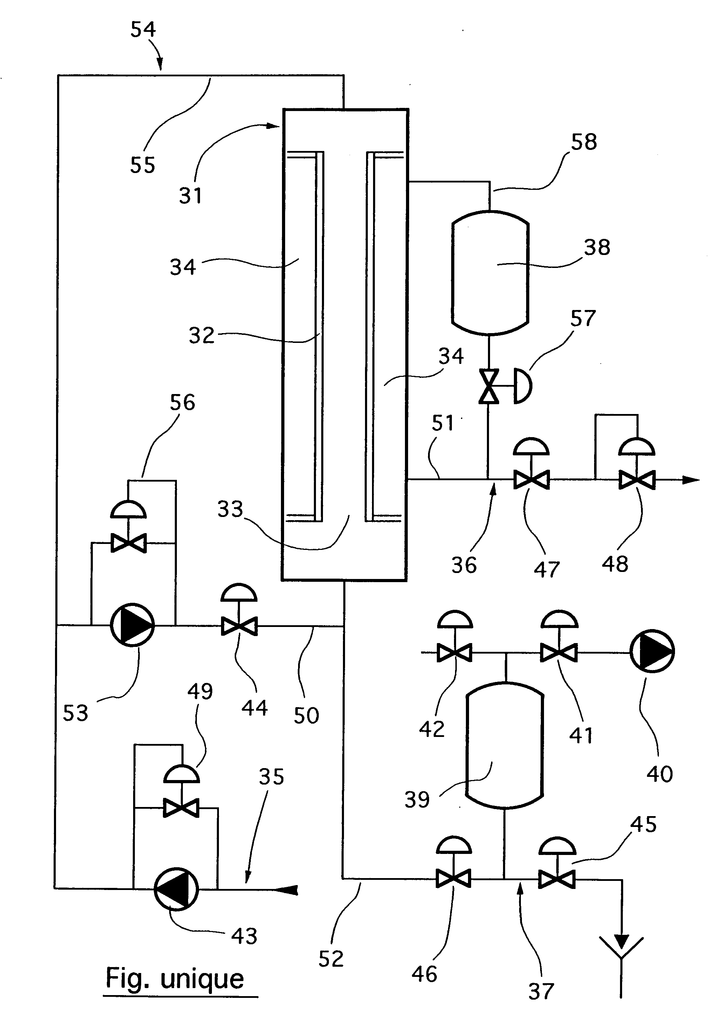

L'invention ainsi que les différents avantages qu'elle présente seront plus facilement compris grâce à la description qui va suivre de deux exemples de réalisation de l'invention, en référence à la figure unique qui représente un appareillage de micro- et d'ultrafiltration tangentielle muni d'un dispositif de décolmatage selon la présente invention.

L'appareillage de micro- et ultrafiltration tangentielle représenté sur la figure comprend un module de filtration 31 muni d'une membrane 32 délimitant une chambre d'alimentation du mélange à filtrer 33 et une chambre de récupération du filtrat 34. La filtration s'effectue de l'intérieur vers l'extérieur. Il s'agit par exemple d'une membrane minérale, rigide, notamment de type céramique. La chambre d'alimentation du mélange à filtrer 33 est constituée par la lumière du cylindre formée par la membrane tubulaire 32. L'appareillage comprend également un réseau d'alimentation du mélange à filtrer 35, un réseau d'évacuation du filtrat 36, un réseau d'évacuation du rétentat 37 et un réseau de recirculation 50.

Le réseau d'alimentation du mélange à filtrer comprend une pompe d'alimentation 43 permettant l'arrivée du mélange dans le réseau de recirculation 50. Une vanne de commande 44 est placée sur cette canalisation. Le réseau d'alimentation 35 comprend également un déversoir 49. Le réseau de recirculation est constitué d'une canalisation 55 permettant de récupérer le mélange à filtrer en partie supérieure du filtre et de le recycler grâce à une pompe de recirculation 53. L'inversion périodique du sens de recirculation peut être envisagée. Le réseau de recirculation est muni d'un déversoir 56, et d'une vanne 60 (ou clapet), destinée à être fermée lorsque le ballon 39 est mis sous vide.

Le réseau d'évacuation du filtrat 36 est constitué d'une canalisation 51 munie d'une vanne d'évacuation 47 et d'un stabilisateur de pression 48. Un ballon de pressurisation à asservissement de pression air et eau 38 est connecté en dérivation à cette canalisation 51. Une vanne 57 est placée à la sortie du ballon 38.

Le ballon 38 est avantageusement un ballon hydrophore, par exemple du type à vessie ou à matelas d'air. Il peut être rempli d'eau pressurisée, à la pression de 4 à 6 bar.

Le réseau d'évacuation du rétentat 37 comprend une canalisation 52 sur laquelle sont disposées deux vannes 45, 46. Un réservoir 39 pouvant être mis partiellement sous vide grâce à une pompe à vide 40 commandée par une vanne 41 est connecté à la canalisation 52. Ce ballon 39 est par ailleurs relié à une canalisation de mise à l'atmosphère commandée par une vanne 42.

Le fonctionnement de l'appareillage est le suivant.

Lors de l'opération de filtration, la vanne 44 commandant l'arrivée du mélange à filtrer par la canalisation 50 et dans la chambre d'alimentation 33 est ouverte. La vanne 47 commandant l'évacuation du filtrat est également ouverte. La vanne 57 ainsi que les vannes 45 et 46 commandant l'évacuation du rétentat sont fermées.

La filtration du mélange à filtrer s'effectue par passage de ce mélange à travers la membrane 32 de la chambre d'alimentation 33 vers la chambre de récupération du filtrat 34.

Avant de procéder à la phase de décolmatage, le réservoir 39 est mis partiellement sous vide en ouvrant la vanne 41 et en mettant en marche la pompe à vide 40. Lorsque le vide partiel est établi à l'intérieur du réservoir 39, la pompe à vide est stoppée et la vanne 41 fermée.

L'opération de décolmatage peut alors commencer en fermant la vanne 47 d'évacuation du filtrat. La pompe 53 fait monter la pression pendant un laps de temps permettant la mise à l'équilibre de la pression dans la membrane aux environs de la pression dans le ballon 38. L'alimentation en mélange à filtrer est alors interrompue en fermant les vannes 44 et 60. On ouvre ensuite la vanne 57 puis, brusquement, on ouvre la vanne 46 permettant de mettre en communication la chambre d'alimentation du filtrat avec le ballon mis sous vide partiel 39. Ceci provoque la détente du mélange d'air et d'eau sous pression contenu dans le ballon de pressurisation 38 de façon à donner naissance à de l'eau blanche, c'est-à-dire à un mélange d'eau et d'air naissant. L'action combinée de la mise sous pression du ballon 38 et du vide partiel existant dans le ballon 39 force le passage de l'eau blanche à travers la membrane 32 en assurant un décolmatage efficace de celle-ci.

Parallèlement, les pompes 43 et 53 continuent à fonctionner via les déversoirs 49 et 56 pour éviter les interruptions intempestives des moteurs des pompes.

L'action de l'eau blanche est déterminante. Comme déjà mentionné, le fluide de décolmatage utilisé est un mélange d'eau et d'air à l'équilibre, c'est-à-dire environ dans les conditions d'équilibre données par le diagramme air/eau aux conditions de pression dans le réservoir. Lorsque la vanne 57 est ouverte, ce mélange à la pression de 4 à 6 bars alimente la membrane 32 par sa face aval. La face amont se trouve tout d'abord à une pression sensiblement égale à celle du ballon de pressurisation 38. La vanne 46 du réservoir 39 mis partiellement sous vide est simultanément actionnée. En conséquence, il se produit une brusque détente du gaz contenu dans le mélange qui donne naissance à un mélange eau et air naissant ou eau blanche au pouvoir décolmatant très élevé. Cette détente intervient notamment à l'intérieur de la membrane.

Plus précisément, selon une caractéristique importante de l'invention, la localisation du "front" de détente du gaz peut être maîtrisée et ajustée en fonction des pertes de charge et donc des gradients de pression dans le circuit d'écoulement de l'eau blanche depuis le ballon 38 jusqu'au réservoir de récupération 39.

Ainsi, on pourra calculer l'installation de façon que les gaz se détendent plutôt au coeur de la membrane ou, le cas échéant plutôt sur la face amont ou plutôt sur la face aval, en fonction du type de décolmatage souhaité.

Ce phénomène de détente à l'intérieur de la membrane conjugué à l'effet du flux continu de fluide traversant la membrane, de façon tout à fait nouvelle par rapport aux techniques connues, assure un nettoyage optimal par évacuation tant des particules situées sur la membrane que celles situées à l'intérieur des pores.

A lui seul ce principe nouveau présente une efficacité très satisfaisante.

Lorsque, de plus, il est combiné à l'action de brusque aspiration provoquée par introduction dans le circuit du réservoir sous vide partiel 39, les performances de nettoyage sont encore accrues.

On notera, en tout état de cause, que le phénomène de détente dans la membrane de l'eau blanche traversant la membrane est très différent de certains autres principes de nettoyage connus tels que ceux consistant à produire de simples contrechocs momentanés, liquides ou gazeux, ou bien l'injection ou le forçage de flux de gaz générés en amont.

L'opération de décolmatage s'achève lorsque le réservoir 39 est rempli. La vanne 46 est alors fermée et le réservoir 39 peut être purgé en ouvrant les vannes 42 de mise à l'atmosphère et 45 d'évacuation du rétentat.

La présence des déversoirs 49 et 56 prévus respectivement sur les réseaux d'alimentation 35 et de recirculation 55 permettent d'effectuer une opération rapide de décolmatage sans arrêter les pompes 43 et 53.

La durée de l'opération de décolmatage est déterminée par le différentiel de pression entre le réservoir 39 et le ballon 38, et la configuration des éléments intermédiaires.

Dans le but de créer une garde hydraulique, le réservoir 39 possède un volume inférieur au ballon de pressurisation 38.

Le tableau I reprend ci-après la position des différentes vannes de l'appareillage au cours de chaque type d'opération, en régime constant.

## TABLEAU I

| Vannes Opération | 60 et 44 | 47 | 46 | 57 | 45 | 41 | 42 | Ballon 38 | Réservoir 39 |
|---|---|---|---|---|---|---|---|---|---|
| Filtration | O | O | F | F | F | F | F | rempli | sous vide |
| Décolmatage | F | F | O | O | F | F | F | se vide | se remplit |
| Filtration + purge | O | O | F | F | O | F | O | se remplit | se vide |
| Filtration + mise sous vide du rés.39 | O | O | F | F | F | O | F | rempli | mise sous vide |

Après l'opération de décolmatage, on réalise avantageusement une forte pression de pressurisation dans la membrane afin d'évacuer le gaz résiduel avant la reprise de la phase de filtration.

**Revendications**

1. Procédé de décolmatage des membranes de filtration du type comprenant au moins une étape consistant à provoquer le passage d'un fluide à travers la membrane, de la chambre de récupération du filtrat vers la chambre d'alimentation du mélange à filtrer selon un flux inverse au sens de filtration, caractérisé en ce que ledit passage de fluide est provoqué en plaçant ladite chambre d'alimentation en dépression brusque par rapport à la chambre de récupération et en ce que ledit fluide est constitué par un mélange d'air et d'eau à l'équilibre à une pression prédéterminée apte à être détendu notamment à l'intérieur de la membrane pour donner de l'eau blanche lors de la détente.

2. Procédé de décolmatage selon la revendication 1 caractérisé en ce que ladite pression prédéterminée est comprise entre environ 4 bars et environ 6 bars.

3. Procédé de décolmatage selon l'une des revendications 1 ou 2 caractérisé en ce que ladite membrane de filtration est du type souple et en ce que ladite dépression brusque est suffisante pour provoquer une déformation élastique de la membrane.

4. Procédé de décolmatage selon l'une des revendications 1 à 3 caractérisé en ce qu'il consiste à ajouter audit fluide un ou plusieurs composants spécifiques choisis dans le groupe constitué par le chlore, l'ozone.

5. Dispositif pour la mise en oeuvre du procédé selon l'une des revendications 1 à 4 comprenant un module de filtration (31) constitué d'une enceinte à l'intérieur de laquelle est disposée au moins une membrane (32) séparant une chambre d'alimentation (33) du mélange à filtrer d'une chambre de récupération du filtrat (34), la filtration s'effectuant par passage du mélange à filtrer à travers la membrane (32) de la chambre d'alimentation (33) vers la chambre de récupération du filtrat (34), caractérisé en ce que ladite chambre d'alimentation (33) est reliée d'une part à une source de vide constituée par un réservoir mis au moins sous vide partiel (39), ladite source de vide pouvant être mise en communication avec ladite chambre d'alimentation (33) grâce à une vanne (46) de façon à provoquer la mise en dépression brusque de ladite chambre d'alimentation (33) et d'autre part à un ballon de pressurisation à asservissement de pression air et eau (38), du type d'un ballon hydrophore.

6. Dispositif selon la revendication 5 caractérisé en ce que ledit ballon de pressurisation (38) est monté en dérivation sur la canalisation aval (51) communiquant avec ladite chambre de récupération de filtrat.

7. Dispositif selon la revendication 5 ou 6 caractérisé en ce que le volume dudit réservoir mis au moins sous vide partiel (39) est inférieur au volume du ballon de pressurisation (38).

8. Dispositif selon l'une des revendications 5 à 7 caractérisé en ce que le volume dudit réservoir mis sous vide partiel (39) correspond à environ 5 fois le volume de la chambre d'alimentation (33) plus environ un demi-litre par mètre carré de membrane.

Fig. unique

EP 0 526 372 A1

**Office européen des brevets**

**RAPPORT DE RECHERCHE EUROPEENNE**

Numero de la demande

EP    92 46 0023
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 11, no. 297 (C-448)(2744) 25 Septembre 1987 & JP-A-62 087 206 ( SHARP KOGYO KK ) 21 Avril 1987 * abrégé * & DATABASE WPIL Section Ch, Week 8723, Derwent Publications Ltd., London, GB; Class D15, AN 87-159757 * abrégé * | 1-3 | B01D65/02 |
| Y | DE-A-3 411 471 (SCHLEICHER & SCHÜLL GMBH) * abrégé; revendications 1,2,5,6,10; figures 1,5 * * page 6 * * page 7, alinéa 2 * * page 12, ligne 10 - ligne 29 * * page 14, alinéa 2 * * page 15, ligne 29 - page 16, ligne 4 * | 1-3 | |
| A | | 5 | **DOMAINES TECHNIQUES RECHERCHES (Int. Cl.5)** |
| A | FR-A-2 586 202 (CENTRE MERIDIONAL D'OENOLOGIE) * abrégé; revendications 1,2,5,6; figure 1 * * page 5, ligne 24 - page 7, ligne 13 * | 1,5,6 | B01D |
| A | EP-A-0 335 648 (ROMICON INC) * abrégé; revendications 1,11; figure 1 * * colonne 4, ligne 12 - ligne 22 * * colonne 5, ligne 24 - ligne 42 * * colonne 8, ligne 26 - ligne 45 * | 1,5 | |
| A | PATENT ABSTRACTS OF JAPAN vol. 12, no. 159 (C-495)(3006) 14 Mai 1988 & JP-A-62 273 012 ( JAPAN ORGANO CO LTD ) 27 Novembre 1987 * abrégé * | 1,5 | |

Le présent rapport a été établi pour toutes les revendications

| Lieu de la recherche | Date d'achèvement de la recherche | Examinateur |
|---|---|---|
| LA HAYE | 28 OCTOBRE 1992 | HOORNAERT P.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

8

**Office européen des brevets**

# RAPPORT DE RECHERCHE EUROPEENNE

Numero de la demande

EP    92 46 0023
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 296 284 (AMSTED)<br>* abrégé; revendications 1,11; figures 1-3 *<br>* colonne 6, ligne 9 - ligne 32 *<br>--- | 5,7 | |
| A | PATENT ABSTRACTS OF JAPAN<br>vol. 7, no. 205 (C-185)(1350) 9 Septembre 1983<br>& JP-A-58 104 612 ( ORGANO K.K. ) 22 Juin 1983<br>* abrégé *<br>----- | 4 | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 28 OCTOBRE 1992 | HOORNAERT P.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)